# EUROPEAN PATENT SPECIFICATION

(11) **EP 1 500 849 B1**
(45) Date of publication and mention of the grant of the patent: **10.07.2013**
(21) Application number: 03723185.9
(22) Date of filing: 24.04.2003
(51) Int. Cl.: F16H 55/08, B23F 19/00, B21K 1/30, B21J 5/06, B21J 5/08

(54) **Gear product**
Zahnradprodukt
Engrenages à roues dentées

(30) Priority: 26.04.2002 JP 2002127352
(43) Date of publication of application: 26.01.2005
(73) Proprietor: O-OKA Corporation, Toyota-shi Aichi-ken (JP)
(72) Inventor: OOKA, Junichi, Takaoka-cho Toyota-shi Aichi-ken (JP)
(74) Representative: Kramer - Barske - Schmidtchen
(86) International application number: PCT/JP2003/005231
(87) International publication number: WO 2003/091604

(56) References cited:
- JP-A- 3 069 844
- JP-A- 10 099 937
- JP-A- 11 300 446
- JP-A- 2001 340 933
- US-A- 5 341 699

## Description

### TECHNICAL FIELD

The present invention relates to a gear product comprising at least two forged gears, according to claim 1 having a plurality of teeth formed at a predetermined pitch on an outer peripheral surface of a disc-form part thereof. An example of a gear product is known from DE-A1-198 44 388.

### BACKGROUND ART

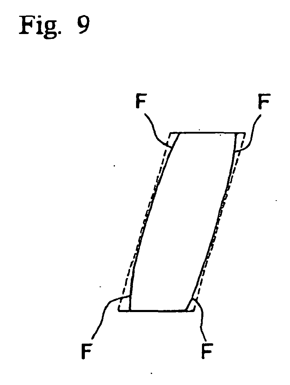

Crowning F,F,F,F are formed at four parts of every both end parts of tooth surfaces of tooth form of a gear product so that tooth thickness may gradually decrease from the center part thereof toward both ends of tooth, as shown in Fig.9 and tooth surfaces engaging each other may always maintain the point contact thereof. A gear product with crowning was manufactured by forming a product having a tooth form without crowning by cutting or forging, and cutting four end parts of tooth surfaces of every tooth so as to form crowning.

In the step of forming crownings at four parts of every tooth by cutting, there were problems that it took a lot of time and trouble, the dispersion of accuracy due to the abrasion of tools and the wastage cost of tools could not be ignored.

In consideration of a purpose of a crowning, there is no problem in function of the crowning as long as crownings are formed on any one of tooth surfaces engaging each other.

A further gear product having a plurality of teeth is known from JP 03069844 A. Therein, two edges are performed among four edges on the tooth surfaces on both sides of the tooth width in order to reduce processing costs while maintaining a good tooth bearing. Accordingly, the two edges are subjected to crowning to be half-crowned. Parts of two gears whose tooth trace has been corrected accordingly, are engaged with each other so that they are directed oppositely thereby permitting them to be free from influence from a tooth bearing.

Making it possible to produce crownings by forging would enhance efficiency greatly and lower costs.

### DISCLOSURE OF THE INVENTION

It is an object of the present invention to provide a gear product and a method for manufacturing the same, in which by forming a crowning on any one of tooth surfaces engaging each other, it is able to reduce the trouble of process for forming a crowning, to abbreviate machining time, to reduce the dispersion of accuracy due to the abrasion of tools and the wastage cost of tools, to enhance efficiency greatly, and to lower costs.

It is another object of the present invention to reduce a machining time for forming a crowning and to provide a technology for forming a crowning by forging.

The present invention is based on a technical concept that in a gear product having plurality of teeth formed at a predetermined pitch on an outer peripheral surface of a disc-form body thereof, a crowning is formed at least at one end part of a tooth surface of at least one of gears engaging each other.

The present invention provides a gear product according to claim 1. Preferred embodiments of the invention are disclosed in dependent claims 2-13. In the present invention the crowning is formed by forging, the present invention has an advantage that there is no need of cutting, it is efficient and there is no dispersion.

### BRIEF DESCRIPTION OF THE DRAWING

Fig.1 is an explanation diagram showing a step for forming the first molded article in the manufacturing method according to the present invention;
Fig.2 is an explanation diagram showing the first molded article;
Fig.3 is an explanation diagram showing exemplary patterns of a crowning formed by a cutting process;
Fig.4 is an explanation diagram showing examples of gears engaging each other;
Fig.5 is an explanation diagram showing an example of forming crownings in upsetting process;
Fig.6 is an explanation diagram showing a combination of gears formed in upsetting process;
Fig.7 is an explanation diagram showing an example of forming a crowning in ironing process;

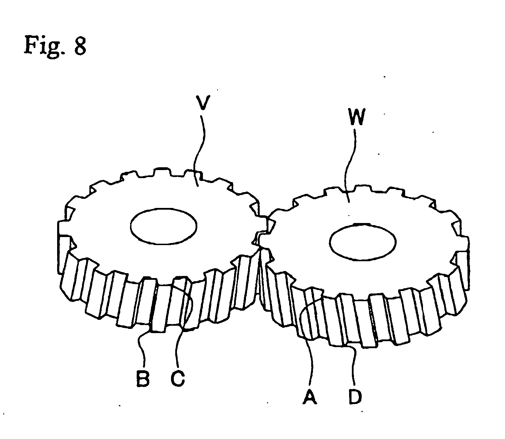

Fig.8 is an explanation diagram showing a combination of gears formed in ironing process; and
Fig.9 is an explanation diagram showing a conventional pattern of forming crownings.

### BEST MODE FOR CARRYING OUT THE INVENTION

A gear product and a method for manufacturing the same according to the present invention will now be described with reference to the drawings.

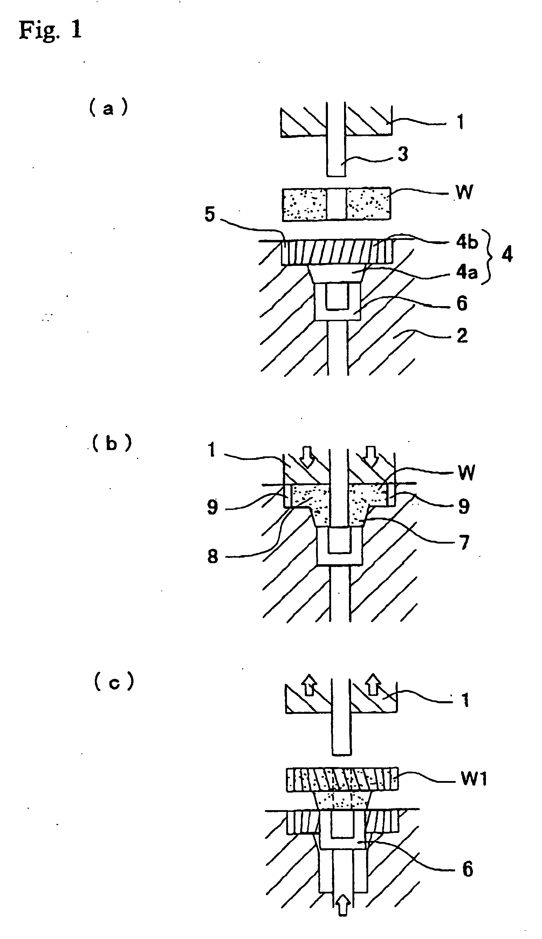

Fig.1 shows a forming step of the first molded article. In Fig.1, 1 is a cope, 2 is a drag and a mandrel 3 is projected at the center of a pressure surface of the cope 1.

Meanwhile, a cavity 4, which is two-stage form composed of a disc-form like boss forming part 4a for forming a boss and a disc-form gear forming part 4b for forming a gear, is provided in the drag 2. A tooth form or profile 5 for forming helical gear is formed on an inner peripheral surface corresponding to the gear forming part 4b and a knockout sleeve 6 is provided on a bottom surface so as to project movably.

When a disc-form work W set at an opening of the cavity 4 is depressed by the cope 1 (as shown in Fig.1(b)), the work W is compressed into the cavity 4, the cavity 4 is filled with the work W, a boss part 7 is formed at the bottom surface by extrusion and a helical tooth 9 is formed on an outer peripheral surface of a disc-form gear part 8 having an axial hole.

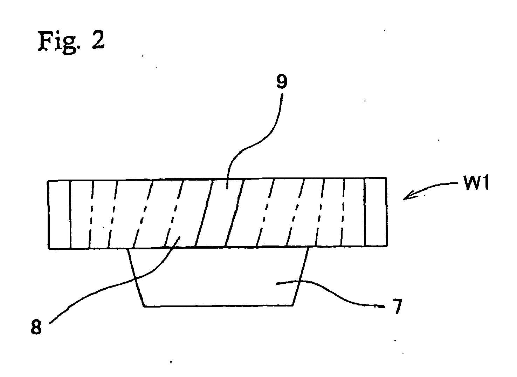

When the cope 1 is send up so as to release the pressure, a first molded article W1 shown in Fig.2 can be took out by push up of the knockout sleeve 6.

The helical tooth 9 of the first molded article W1 molded in this process has no crowning.

Then, a crowning is formed in the second process.

There are three methods for forming a crowning. In the first, one of them, not in accordance with the present invention, is a cutting process.

The cutting process is the same as a conventional cutting process with cutting tools.

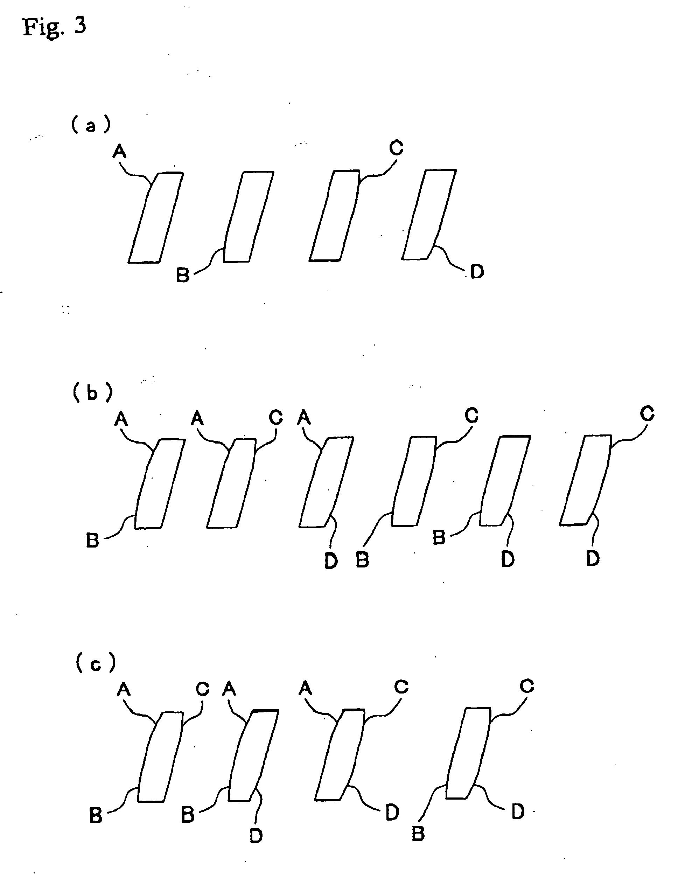

However, cut parts are not formed on all of the four parts of both end parts on tooth surfaces and a crowning is formed in one pattern selected from fourteen patterns. The fourteen patterns comprise four patterns in which the crowning is formed at one of an upper end part A or a lower end part B of an upper inclined surface 91, an upper end part C or a lower end part D of a lower inclined surface 92 (as shown in Fig.3(a)); six patterns in which crownings are formed at two parts such as the upper end part A and the lower end part B of the upper inclined surface 91, the upper end part A of the upper inclined surface 91 and the upper end part C of the lower inclined surface 92, the upper end part A of the upper inclined surface 91 and the lower end part D of the lower inclined surface 92, the lower end part B of the upper inclined surface 91 and the upper end part C of the lower inclined surface 92, the lower end part B of the upper inclined surface 91 and the lower end part D of the lower inclined surface 92, or the upper end part C and the lower end part D of the lower inclined surface 92 (as shown in Fig.3(b)); and four patterns in which crownings are formed at three parts such as the upper end part A and the lower end part B of the upper inclined surface 91 and the upper end part C of the lower inclined surface 92, the upper end part A and the lower end part B of the upper inclined surface 91 and the lower end part D of the lower inclined surface 92, the upper end part A of the upper inclined surface 91 and the upper end part C and the lower end part D of the lower inclined surface 92, or the lower end part B of the upper inclined surface 91 and the upper end part C and the lower end part D of the lower inclined surface 92 (as shown in Fig.3(c)).

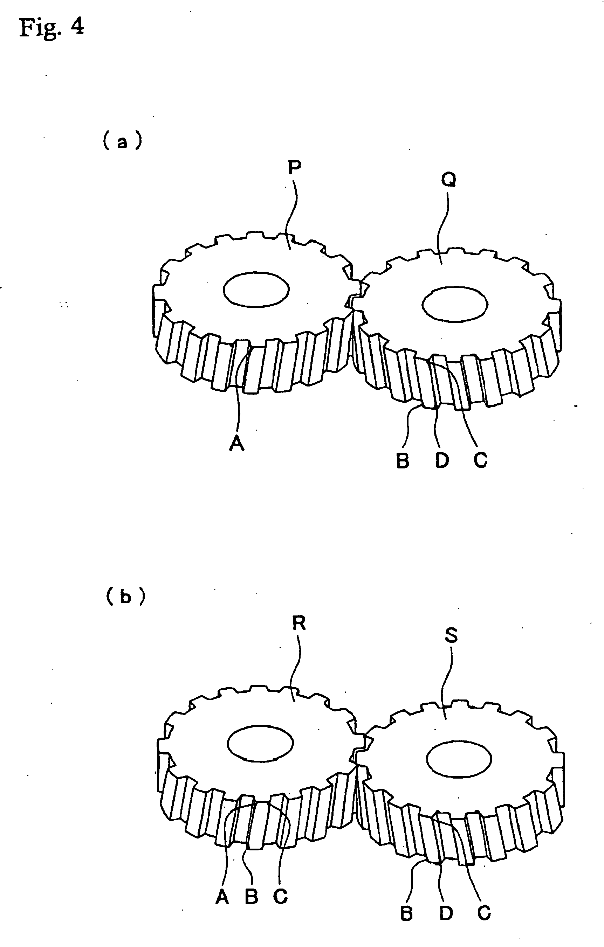

In the gear products formed in the above described manner, there is no problem in function of a crowning as long as a crowning is formed on at least one tooth surface of gears engaging each other such as a gear P having a crowning formed at the upper end part A of the upper inclined surface 91 and a gear Q having crownings formed at the lower end part B of the lower inclined surface 92 and the upper end part C and lower end part D of the upper inclined surface 91 (since a inclination of a tooth on the gear Q is reverse relation to that of a tooth on the gear P and the upper inclined surface 91 of the gear P is engaged with the lower inclined surface 92 of the gear Q, the responding symbol is used to the engaged part of the gear Q which is engaged with that of the gear G), as shown in Fig.4(a).

Moreover, for example, in the combination of a gear R on which crownings are formed at the upper end part A and the lower end part B of the upper inclined surface 91 and the upper end part C of the lower inclined surface 92, and a gear S on which crownings are formed at the lower end part B of the lower inclined surface 92 and the upper end part C and the lower end part D of the upper inclined surface 91 (as shown in Fig.4(b)), there is no problem when crownings are redundantly formed at the corresponding parts respectively such as the lower end part B of the upper inclined surface 91 and the upper end part C of the lower inclined surface 92 on the gear R and the lower end part B of the lower inclined surface 92 and the upper end part C of the upper inclined surface 91 on the gear S. It is proper that the crowning is formed on at least one part of engaged part for engaging the other on the combination of gears.

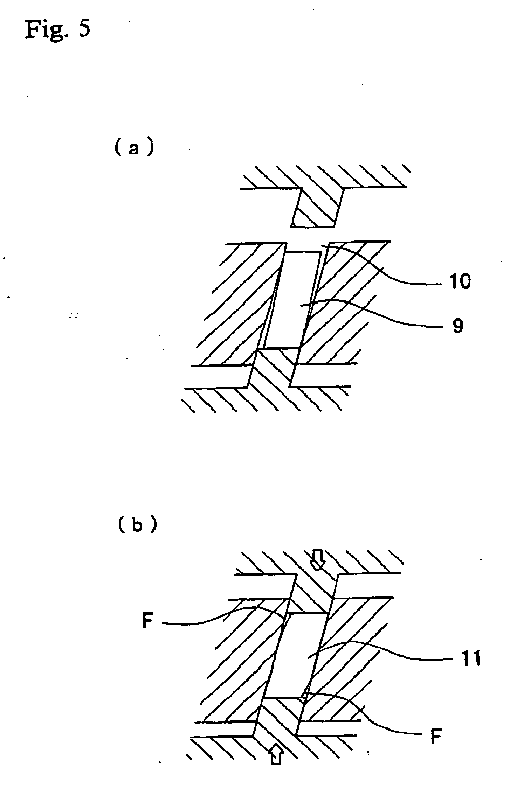

In the second method of the three described methods for manufacturing a crowning, a crowning is formed by upsetting process as a forging process. In this upsetting process, as shown in Fig.5(a) and Fig.5(b), a helical tooth 9 is depressed in an axial direction in a die 10 for forming a helical tooth. When the helical tooth 9 is depressed, a lower part of an upper side surface 91 and an upper part of a lower side surface 92 are strongly depressed on an inner surface of the die 10 for forming a helical tooth.

Meanwhile, an upper part of the upper side tooth surface 91 and a lower part of the lower side tooth surface 92 are weakly depressed and the upper part of the upper side tooth surface 91 and a lower part of the lower side tooth surface 92 are stretched toward inside thereof.

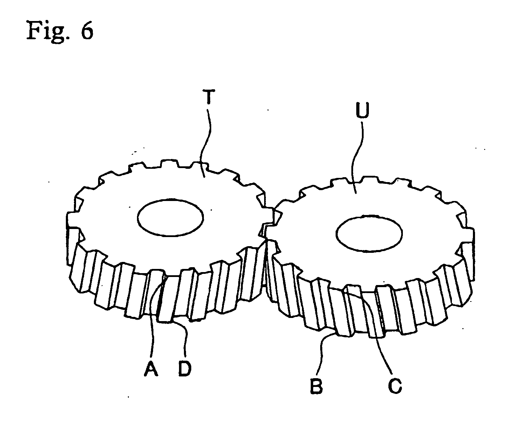

Therefore, crownings are formed at the upper part A of the upper side tooth surface 111 and the lower part D of the lower side tooth surface 112 of a helical tooth 11 of the gear shown in Fig.5(b) and the gear T shown in Fig.6.

In this way, crownings formed by upsetting process are formed at parts having left-to-right inverted relationship determined by an inclined direction of a helical tooth. Therefore, in a pair of the gear T and a gear U having crownings formed in reverse patterns with each other, crownings are formed at all of four parts A,B,C,D of a meshing surface of any teeth.

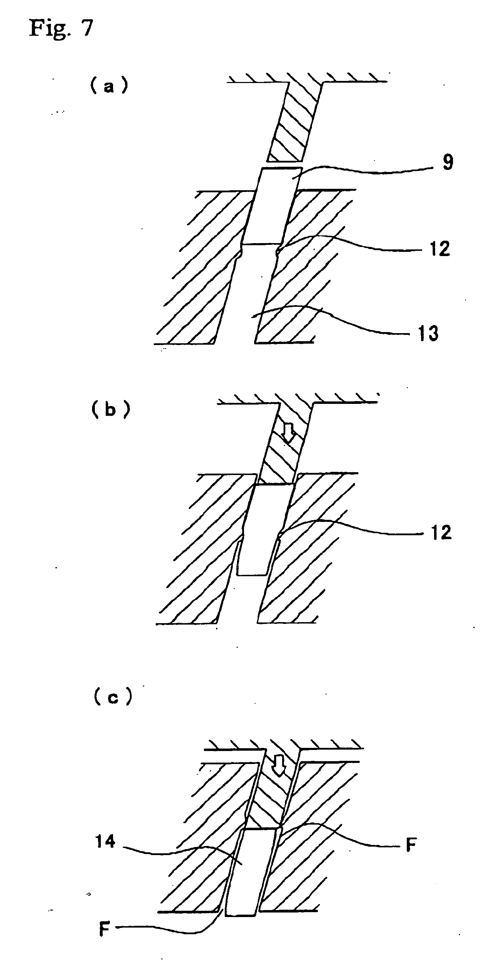

In the ironing process as one of remaining forging processes, a helical tooth 9 is ironed along a tooth trace by putting the helical tooth 9 through a die 13 for forming a helical tooth having constrictions formed on an inner surface thereof, as shown in Figs.7(a)-(c).

Crownings F,F are formed at a lower part of an upper side tooth surface 141 and the upper part of the lower side tooth surface 142 of a helical tooth 14 by ironing.

In this way, crownings formed by ironing process also are formed at parts having left-to-right inverted relationship determined by an inclined direction of a helical tooth. Therefore, in a pair of the gear V and a gear W having crownings formed in reverse patterns with each other, crownings are formed at all four parts A,B,C,D of a meshing surface of any teeth.

When the crowning is formed in upsetting and ironing process as one of forging processes, there is no need of cutting process, the crowning is formed instantly and there is no dispersion.

By the way, in a case that a crowning is formed by cutting, crownings can be formed at any other tooth form except for a helical tooth.

Moreover, there is no problem in finishing a crowning formed by forging process so as to raise the accuracy of the crowning.

In all gear products manufactured by these forging processes, when one crowning of both side tooth surface in tooth trace direction is formed at an upper end part of one side tooth surface, the other crowning thereof is formed at an lower end part of the other side tooth surface. Meanwhile, on cutting process, the crownings can be formed on all patterns shown in Fig.3 and in result, the number of the cut parts is less than the number of cut parts in a conventional cutting process.

Moreover, it is able to achieve rationalization by the combination of forging and cutting.

The preferred embodiments of the present invention, as herein disclosed, are taken as some embodiments for explaining the present invention. It is to be understood that the present invention should not be restricted by these embodiments and any modifications and additions are possible so far as they are not beyond the scope of the patent claims.

### INDUSTRIAL APPLICABILITY

In a gear product having a plurality of tooth formed at a predetermined pitch on an outer peripheral surface of a disc-form body thereof and a method for manufacturing the same, by forming a crowning at least at one end part of a tooth surface of at least one of gears engaging each other, it is able to reduce the trouble of process for forming a crowning, to abbreviate machining time, to reduce the dispersion of accuracy due to abrasion of tools and the wastage cost of tools, to enhance efficiency greatly, and to lower costs.

## Claims

1. A gear product comprising at least two forged gears (P, Q; T, U; V, W) having a plurality of helical teeth (9; 11; 14) formed at a predetermined pitch on an outer peripheral surface of a disc-form body thereof, the gear product comprising
at least one forged crowning (F) formed on each end part of the helical tooth surface of at least one forged gear (P, Q; T, U; V, W) of the forged gears (P, Q; T, U; V, W) engaging each other,
wherein one forged crowning (F) is formed on at least one end part of an upper side tooth surface (91) and the other forged crowning (F) is formed on at least the other end part of a lower side tooth surface (92) of the at least one forged gear (P, Q; T, U; V, W).

2. A gear product according to claim 1, further comprising
one forged crowning (F) formed on at least one end part of an upper side tooth surface (91) and another forged crowning (F) formed on at least the other end part of a lower side tooth surface (92) of at least another forged gear (P, Q; T, U; V; W) of the forged gears (P, Q; T, U; V; W) engaging each other.

3. A gear product according to claim 1, further comprising
a further forged crowning (F) formed on the other end part of the upper side tooth surface (91) on the at least one forged gear (P, Q; T, U; V, W).

4. A gear product according to claim 1, further comprising
one forged crowning (F) formed on at least one end part of an upper side tooth surface (91) of at least another forged gear (P, Q; T, U; V; W) of the forged gears (P, Q; T, U; V; W) engaging each other.

5. A gear product according to claim 1, wherein
the one forged crowning (F) is formed on an upper end part of the upper side tooth surface (91) and the other forged crowning (F) is formed on a lower end part of the lower side tooth surface (92) of the one forged gear (P, Q; T, U; V, W).

6. A gear product according to claim 1, wherein
the one forged crowning (F) is formed on a lower end part of the upper side tooth surface (91) and the other forged crowning (F) is formed on an upper end part of the lower side tooth surface (92) of the one forged gear (P, Q; T, U; V, W).

7. A gear product according to claim 2, wherein
the one forged crowning (F) is formed on an upper end part of the upper side tooth surface (91) and the other forged crowning (F) is formed on a lower end part of the lower side tooth surface (92) of the other forged gear (P, Q; T, U; V, W).

8. A gear product according to claim 2, wherein
the one forged crowning (F) is formed on a lower end part of the upper side tooth surface (91) and the other forged crowning (F) is formed on an upper end part of the lower side tooth surface (92) of the other forged gear (P, Q; T, U; V, W).

9. A gear product according to claim 3, wherein
the further forged crowning (F) is formed on a lower end part of the upper side tooth surface (91) of the one forged gear (P, Q; T, U; V, W).

10. A gear product according to claim 3, wherein
the further forged crowning (F) is formed on an upper end part of the upper side tooth surface (91) of the one forged gear (P, Q; T, U; V, W).

11. A gear product according to claim 4, further comprising
the one forged crowning (F) formed at an upper end part of the upper side tooth surface (91) of the other forged gear (P, Q; T, U; V, W).

12. A gear product according to claim 4, further comprising
the one forged crowning (F) formed at a lower end part of the upper side tooth surface (91) of the other forged gear (P, Q; T, U; V, W).

13. A gear product according to claim 1, wherein
the at least one forged gear (P, Q; T, U; V, W) has exactly two forged crownings (F).

## Patentansprüche

1. Getriebeprodukt mit wenigstens zwei geschmiedeten Zahnrädern (P, Q; T, U; V, W), die mehrere spiralförmige Zähne (9; 11; 14) aufweisen, die unter einer vorbestimmten Steigung an einer äußeren Umfangsfläche eines scheibenförmigen Körpers davon gebildet sind, wobei das Getriebeprodukt
wenigstens eine geschmiedete Wölbung (F) aufweist, die an jedem Endbereich der spiralförmigen Zahnfläche wenigstens eines geschmiedeten Zahnrads (P, Q; T, U; V, W) der miteinander in Eingriff stehenden geschmiedeten Zahnräder (P, Q, T, U; V, W) gebildet ist,
wobei eine geschmiedete Wölbung (F) an wenigstens einem Endbereich einer oberen Zahnfläche (91) gebildet ist und die andere geschmiedete Wölbung (F) an wenigstens dem anderen Endbereich der unteren Zahnfläche (92) des wenigstens einen geschmiedeten Zahnrads (P, Q; T, U; V, W) gebildet ist.

2. Getriebeprodukt nach Anspruch 1, ferner mit
einer geschmiedeten Wölbung (F), die an wenigstens einem Endbereich einer oberen Zahnfläche (91) gebildet ist, und einer anderen geschmiedeten Wölbung (F), die an wenigstens dem anderen Endbereich einer unteren Zahnfläche (92) des wenigstens anderen geschmiedeten Zahnrads (P, Q; T, U; V, W) der miteinander in Eingriff stehenden geschmiedeten Zahnräder (P, Q; T, U; V, W) gebildet ist.

3. Getriebeprodukt nach Anspruch 1, ferner mit
einer weiteren geschmiedeten Wölbung (F), die an dem anderen Endbereich der oberen Zahnfläche (91) an dem wenigstens einen geschmiedeten Zahnrad (P, Q; T, U; V, W) gebildet ist.

4. Getriebeprodukt nach Anspruch 1, ferner mit
einer geschmiedeten Wölbung (F), die an wenigstens einem Endbereich einer oberen Zahnfläche (91) des wenigstens anderen geschmiedeten Zahnrads (P, Q; T, U; V, W) der miteinander in Eingriff stehenden geschmiedeten Zahnräder (P, Q; T, U; V, W) gebildet ist.

5. Getriebeprodukt nach Anspruch 1, wobei
die eine geschmiedete Wölbung (F) an einem oberen Endbereich der oberen Zahnfläche (91) gebildet ist und die andere geschmiedete Wölbung (F) an einem unteren Endbereich der unteren Zahnfläche (92) des einen geschmiedeten Zahnrads (P, Q; T, U; V, W) gebildet ist.

6. Getriebeprodukt nach Anspruch 1, wobei
die eine geschmiedete Wölbung (F) an einem unteren Endbereich der oberen Zahnfläche (91) gebildet ist und die andere geschmiedete Wölbung (F) an einem oberen Endbereich der unteren Zahnfläche (92) des einen geschmiedeten Zahnrads (P, Q; T, U; V, W) gebildet ist.

7. Getriebeprodukt nach Anspruch 2, wobei
die eine geschmiedete Wölbung (F) an einem oberen Endbereich der oberen Zahnfläche (91) gebildet ist und die andere geschmiedete Wölbung (F) an einem unteren Endbereich der unteren Zahnfläche (92) des anderen geschmiedeten Zahnrads (P, Q; T, U; V, W) gebildet ist.

8. Getriebeprodukt nach Anspruch 2, wobei
die eine geschmiedete Wölbung (F) an einem unteren Endbereich der oberen Zahnfläche (91) gebildet ist und die andere geschmiedete Wölbung (F) an einem oberen Endbereich der unteren Zahnfläche (92) des anderen geschmiedeten Zahnrads (P, Q; T, U; V, W) gebildet ist.

9. Getriebeprodukt nach Anspruch 3, wobei
die weitere geschmiedete Wölbung (F) an einem unteren Endbereich der oberen Zahnfläche (91) des einen geschmiedeten Zahnrads (P, Q; T, U; V, W) gebildet ist.

10. Getriebeprodukt nach Anspruch 3, wobei
die weitere geschmiedete Wölbung (F) an einem oberen Endbereich der oberen Zahnfläche (91) des einen geschmiedeten Zahnrads (P, Q; T, U; V, W) gebildet ist.

11. Getriebeprodukt nach Anspruch 4, ferner mit
der einen geschmiedeten Wölbung (F), die an einem oberen Endbereich der oberen Zahnfläche (91) des anderen geschmiedeten Zahnrads (P, Q; T, U; V, W) gebildet ist.

12. Getriebeprodukt nach Anspruch 4, ferner mit
der einen geschmiedeten Wölbung (F), die an einem unteren Endbereich der oberen Zahnfläche (91) des anderen geschmiedeten Zahnrads (P, Q; T, U; V, W) gebildet ist.

13. Getriebeprodukt nach Anspruch 1, wobei
das wenigstens eine geschmiedete Zahnrad (P, Q; T, U; V, W) exakt zwei geschmiedete Wölbungen (F) aufweist.

## Revendications

1. Engrenages à roues dentées comprenant au moins deux engrenages forgés (P, Q ; T, U ; V, W) ayant une pluralité de dents hélicoïdales (9 ; 11 ; 14) formées à un intervalle prédéterminé sur une surface périphérique externe d'un corps en forme de disque de ceux-ci, les engrenages à roues dentées comprenant
au moins une couronne forgée (F) formée à chaque partie d'extrémité de la surface dentée hélicoïdale d'au moins un engrenage forgé (P, Q ; T, U ; V, W) des engrenages forgés (P, Q ; T, U ; V, W) venant en prise les uns dans les autres,
dans lesquels au moins une couronne forgée (F) est formée sur au moins une partie d'extrémité d'une surface dentée côté supérieur (91) et l'autre couronne forgée (F) est formée sur au moins l'autre partie d'extrémité d'une surface dentée côté inférieur (92) de l'au moins un engrenage forgé (P, Q ; T, U ; V, W).

2. Engrenages à roues dentées selon la revendication 1, comprenant en outre
une couronne forgée (F) formée sur au moins une partie d'extrémité d'une surface dentée côté supérieur (91) et une autre couronne forgée (F) formée sur au moins l'autre partie d'extrémité d'une surface dentée côté inférieur (92) d'au moins un autre engrenage forgé (P, Q ; T, U ; V, W) des engrenages forgés (P, Q ; T, U ; V, W) venant en prise les uns dans les autres.

3. Engrenages à roues dentées selon la revendication 1, comprenant en outre
une couronne forgée (F) supplémentaire formée sur l'autre partie d'extrémité de la surface dentée côté supérieur (91) sur l'au moins un engrenage forgé (P, Q ; T, U ; V, W).

4. Engrenages à roues dentées selon la revendication 1, comprenant en outre
une couronne forgée (F) formée sur au moins une partie d'extrémité d'une surface dentée côté supérieur (91) d'au moins un autre engrenage forgé (P, Q ; T, U; V, W) des engrenages forgés (P, Q ; T, U ; V, W) venant en prise les uns dans les autres.

5. Engrenages à roues dentées selon la revendication 1, dans lesquels
l'une couronne forgée (F) est formée sur une partie d'extrémité supérieure de la surface dentée côté supérieur (91) et l'autre couronne forgée (F) est formée sur une partie d'extrémité inférieure de la surface dentée côté inférieur (92) de l'un engrenage forgé (P, Q ; T, U ; V, W).

6. Engrenages à roues dentées selon la revendication 1, dans lesquels
l'une couronne forgée (F) est formée sur une partie d'extrémité inférieure de la surface dentée côté supérieur (91) et l'autre couronne forgée (F) est formée sur une partie d'extrémité supérieure de la surface dentée côté inférieur (92) de l'un engrenage forgé (P, Q ; T, U ; V, W).

7. Engrenages à roues dentées selon la revendication 2, dans lesquels
l'une couronne forgée (F) est formée sur une partie d'extrémité supérieure de la surface dentée côté supérieur (91) et l'autre couronne forgée (F) est formée sur une partie d'extrémité inférieure de la surface dentée côté inférieur (92) de l'autre engrenage forgé (P, Q;T,U;V,W).

8. Engrenages à roues dentées selon la revendication 2, dans lesquels
l'une couronne forgée (F) est formée sur une partie d'extrémité inférieure de la surface dentée côté supérieur (91) et l'autre couronne forgée (F) est formée sur une partie d'extrémité supérieure de la surface dentée côté inférieur (92) de l'autre engrenage forgé (P, Q ; T, U ; V, W).

9. Engrenages à roues dentées selon la revendication 3, dans lesquels
la couronne forgée (F) supplémentaire est formée sur une partie d'extrémité inférieure de la surface dentée côté supérieur (91) de l'un engrenage forgé (P, Q ; T, U ; V, W).

10. Engrenages à roues dentées selon la revendication 3, dans lesquels
la couronne forgée (F) supplémentaire est formée sur une partie d'extrémité supérieure de la surface dentée côté supérieur (91) de l'un engrenage forgé (P, Q ; T, U ; V, W).

11. Engrenages à roues dentées selon la revendication 4, comprenant en outre
l'une couronne forgée (F) formée sur une partie d'extrémité supérieure de la surface dentée côté supérieur (91) de l'autre engrenage forgé (P, Q ; T, U ; V, W).

12. Engrenages à roues dentées selon la revendication 4, comprenant en outre
l'une couronne forgée (F) formée sur une partie d'extrémité inférieure de la surface dentée côté supérieur (91) de l'autre engrenage forgé (P, Q ; T, U ; V, W).

13. Engrenages à roues dentées selon la revendication 1, dans lesquels
l'au moins un engrenage forgé (P, Q ; T, U ; V, W) a exactement deux couronnes forgées (F).
